Europäisches Patentamt

(19) European Patent Office  (11) Publication number: **0 076 252**
Office européen des brevets  **B1**

(12) **EUROPEAN PATENT SPECIFICATION**

(45) Date of publication of patent specification: **04.09.85**  (51) Int. Cl.⁴: **F 16 F 15/04**

(21) Application number: **81901717.9**

(22) Date of filing: **19.06.81**

(86) International application number:
**PCT/NO81/00025**

(87) International publication number:
**WO 82/03434 14.10.82 Gazette 82/25**

(54) **VIBRATION-DAMPER.**

(30) Priority: **08.04.81 NO 811213**

(43) Date of publication of application:
**13.04.83 Bulletin 83/15**

(45) Publication of the grant of the patent:
**04.09.85 Bulletin 85/36**

(84) Designated Contracting States:
**AT CH DE FR GB LI NL SE**

(56) References cited:
**DE-C-2 405 368**
**FR-A- 640 809**
**GB-A- 765 185**
**SE-B- 393 444**
**US-A-2 728 166**
**US-A-2 875 552**
**US-A-3 717 318**
**US-A-3 970 273**

(73) Proprietor: **A/S NOMAR**
**Mollendalsbakken 11**
**N-5000 Bergen (NO)**

(72) Inventor: **BULL, Schak**
**Svartediksveien 6 A**
**N-5000 Bergen (NO)**

(74) Representative: **Bayliss, Geoffrey Cyril et al**
**BOULT, WADE & TENNANT 27 Furnival Street**
**London EC4A 1PQ (GB)**

Courier Press, Leamington Spa, England.

## Description

This invention relates to a vibration isolator for supporting machines, for example machine tools, and is of the type comprising an elastic vibration isolating body and compressive load transferring means with at least a rigid plate shaped member which engages the upper side of the elastic body.

Various designs of such vibration isolators are previously known. In a very common design practice the vibration isolating body, which most often consists of rubber, is bonded by vulcanisation to the rigid plate member which transfers the load to the rubber body. An example of such known design may be found in Norwegian Patent No. 136,221, which in principle is based upon a vibration isolating support element the rubber body of which is adapted to be directly in engagement with the base or floor. This way of using the element is also of particular interest in connection with the present invention.

Other known designs are based upon a more or less complete encapsulation of the rubber body in housings of steel or other metals such as the construction disclosed in GB—A—765185. However, there are also examples of the opposite, i.e. that the rigid steel or metal members are completely or in part encased by the rubber body or parts thereof. The published German Patent Application 2 309 950 shows such an embodiment, in which the rubber body or the rubber bodies have been attached to the metal parts by vulcanisation.

With vibration isolators of the type concerned here the load in practice will be substantially a pure compressive load and this implies that the rubber body will tend to bulge out laterally if precautions have not been taken to avoid this. In addition to a more or less complete encasing of the rubber body as mentioned above, reinforcement elements included into the rubber body may serve to prevent such bulging.

It is common for vibration isolators for machines and the like to be provided with a possibility of height adjustment, and this has particular interest in connection with the present invention. In height adjustable vibration isolators, however, the design task exists to the effect that the mutually movable parts shall be held together before mounting the isolator underneath a machine or the like. In earlier designs where this mutual anchoring has not been provided for by vulcanization of the rubber body to the respective movable parts, there have been employed various mechanical means which have contributed to a more complicated and expensive design.

In particular when there are several parts which shall be joined to the rubber body, vulcanisation has the disadvantage that the rigid metal parts must be inserted into the vulcanisation mould and thereby make the vulcanising procedure problematic.

Thus the present invention is directed to an improved vibration isolator which makes a simpler and more rationalized manufacture possible and, in which the disadvantages as discussed above are avoided. Thus it will be possible to obtain a cheaper vibration isolator which involves flexibility both for the manufacturer and for the dealer and possibly also the user.

The invention provides a vibration isolator for supporting machines, for example machine tools, comprising an elastic vibration isolating body and compressive load transferring means with a rigid plate member engaging the upper side of the elastic body, and with a rigid upper part having means for height adjustment thereof in relation to said plate member, said upper part being provided with a peripheral edge portion and being adapted to support a machine foot or the like on its top surface, characterised in that the body is provided with an upwardly projecting flange portion having an inwardly directed bead being shaped to anchor said peripheral edge portion of the upper part by elastic deformation of said head to keep said upper part and said plate member assembled.

Thus, the solution stated here is based upon the principle that the rigid plate member of the compressive load transferring means is attached to the rubber body after the vulcanisation thereof. In this way the vulcanisation operation is much simplified.

This results in reduced manufacturing costs. Moreover, the assembly of the individual parts constituting the vibration isolator, may be carried out very simply and quickly without use of any expensive and complicated equipment. In practice this may be effected by inserting the respective metal parts into the rubber body at the same time as this is expanded in order to remove the mould part or core which is necessary in order to form the cavity in the rubber body. An additional advantage consists therein that the rigid metal part or parts may be painted or surface treated in other ways without having the rubber body mounted thereon. The encasing by the rubber body resulting from the solution stated here, gives a favourable outer appearance of the vibration isolator since the isolator will present a comparatively closed continuous surface in the lateral direction. This closing or encasing with rubber prevents dirt and corrosive liquids from entering the vibration isolator, which has particular importance when the height adjustable embodiment is concerned.

Additional advantages as well as other novel and specific features of a vibration isolator according to the invention, will appear from the following description with reference to the drawings in which:

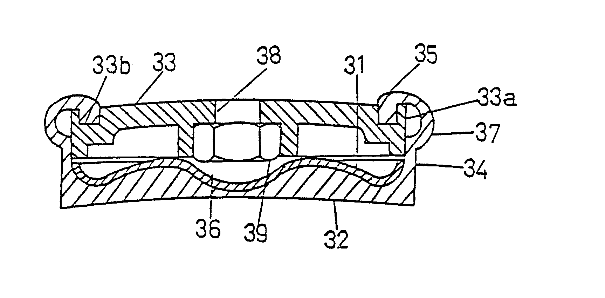

The single figure shows a preferred embodiment of the vibration isolator according to the invention.

One of the main parts in the arrangement of the figure is a rigid plate shaped member 31 which may be manufactured by pressing a sheet steel material which preferably has radial ribs (not shown). The means for transferring the compressive load comprises a rigid upper part 33 which is generally plate shaped and which has a central hole 38 for a screw bolt. On the underside of the upper part 33 and in connection with the hole 38 there is cast-in a common nut 39 so that in a simple and inexpensive way there is provided a thread for the screw bolt the lower end of which is adapted to engage a bearing centrally on the plate member 31. When turning the screw bolt height adjustment may be effected, as the upper part 33 is brought to or removed from the plate member 31. The narrow gap between these two parts shown in the figure, may then increase within the permitted range of height adjustment.

The rubber body 32 has an upwardly projecting peripheral flange portion 34 the upper part of which comprises a bulge 37 which is adapted to be tensioned as height adjustment is effected with increasing height levels. This is an advantageous arrangement which makes it possible to avoid undue strains in the rubber under certain conditions. However, such bulging is not always necessary, since the flange portion of the rubber body may have such dimensions in relation to the height adjustment range that the natural stretchability of the rubber is able to accommodate the height adjustment concerned.

The edge portion 33a on upper part 33 has an associated recess 33b inwardly thereof and for example in the form of a continuous groove, in which the bead 35 of the rubber body fits in. The upper side of the bead is somewhat elevated with respect to the surface of the upper part 33, so that a machine foot resting thereon will contribute to urging the bead 35 into a secure anchoring in the recess 33b. It is not necessary with specific means of attachment of any kind, for example an adhesive, either for the attachment of the bead 35 on the upper part 33 or for the anchoring of the rubber body to the plate member 31. During storage and handling of the vibration isolator before the mounting thereof underneath a machine or the like, the rubber body 32 with its encasing design as shown, will in a safe way keep the parts 31 and 33 together so that no problems arise even though these in principle are loose and movable in relation to each other.

The assembly of the parts and members in the vibration isolator can take place in a simple and quick way with minimal possibilities of erroneous mounting. This implies that these parts and members may possibly be sold and shipped as individual parts intended for assembly on or near the place of use, for example in special assembly plants abroad.

In the above description there has been a reference to rubber as the material for the elastic body, but it is obvious that also other materials having corresponding properties, for example plastic materials, may be employed. In the metal parts incorporated in the vibration isolator steel has been mentioned, particularly for the rigid plate shaped member which transfers the compressive load to the elastic body. The upper part 33 may in particular be manufactured by injection moulded aluminium. It is obvious, however, that also these parts may be manufactured from other metals or suitable materials which have the necessary stiffness and strength.

With the solution described here advantage is taken of the material properties so that the vibration isolating body may be mounted and anchored by elastic expansion and subsequent contraction, without use of other means of attachment or vulcanisation. Thus, the elastic body is considered to be completely vulcanised before this assembly takes place. Attachment of the elastic body in this way means that the inwardly directed head has a minimum diameter which is smaller than the outer diameter of at least certain parts of the peripheral edge portion with which the bead shall cooperate. It is obvious that if it is desired in certain instances, this anchoring by elastic deformation may be supplemented with other means of attachment, for example a partly or local adhesive joint.

**Claims**

1. A vibration isolator for supporting machines, for example machine tools, comprising an elastic vibration isolating body (32) and compressive load transferring means with a rigid plate member (31) engaging the upper side of the elastic body, and with a rigid upper part (33 having means (39) for height adjustment thereof in relation to said plate member (31), said upper part (33) being provided with a peripheral edge portion (33a) and being adapted to support a machine foot or the like on its top surface, characterised in that the body (32) is provided with an upwardly projecting flange portion (34) having an inwardly directed bead (35) being shaped to anchor said peripheral edge portion (33a) of the upper part (33) by elastic deformation of said bead (35) to keep said upper part (33) and said plate member (31) assembled.

2. Vibration isolator according to claim 1, characterised therein that the bead (35) is inverted approximately 180° with respect to the flange portion (34) and that the peripheral edge portion is preferably provided with a complementary recess (33b) for accommodating the inverted bead.

3. Vibration isolator according to claim 1 or claim 2, characterised therein that the upwardly facing surface of the bead (35) lies somewhat above the adjacent upwardly facing support surface for the machine foot or the like on the compressive load transferring means, so that this surface of the bead is adapted to be pressed down by the machine foot.

4. Vibration isolator according to claim 1, 2 or 3, characterised therein that the underside of the plate member (31) has at least in part a concave curvature and that the thickness of the body (42) along the periphery is reduced in relation to the thickness of more inwardly located parts of the body.

5. Vibration isolator according to any one of claims 1 to 4, characterised therein that the plate member (31) is a pressed steel plate having a central depression (36) adapted to accommodate the end of an anchoring or adjustment screw for the machine foot.

6. Vibration isolator according to any one of claims 1 to 5, characterised therein that the peripheral flange portion has a bulge (37) which gives flexibility in the flange portion during height adjustment of the machine support.

## Patentansprüche

1. Schwingungsdämpfer zur Unterstützung von Maschinen, beispielsweise Werkzeugmaschinen, mit einem elastischen, schwingungsdämpfenden Körper (32) und einem Mittel zur Übertragung der Drucklast mit einem in Form einer starren Platte ausgebildeten Element (31), das auf der Oberseite des elastischen Körpers aufliegt, und mit einem starren Oberteil (33) mit Mitteln (39) zur Höheneinstellung desselben relativ zu dem als Platte ausgebildeten Element (31), wobei das Oberteil (33) mit einem in Umfangsrichtung umlaufenden Kantenteil (33a) versehen ist und dafür eingerichtet ist, daß es auf seiner oberen Oberfläche den Fuß einer Maschine oder dergleichen untersützt, dadurch gekennzeichnet, daß der Körper (32) mit einem nach oben vorspringenden Flanschteil (34) mit einer einwärts gerichteten Umbördelung (35) versehen ist, die so geformt ist, daß sie den in Umfangsrichtung umlaufenden Kantenteil (33a) des Oberteils (33) infolge elastischer Deformation der Umbördelung (35) verankert, so daß das Oberteil (33) und das als Platte ausgebildete Element (31) zusammengesetzt gehalten werden.

2. Schwingungsdämpfer nach Anspruch 1, dadurch gekennzeichnet, daß die Umbördelung (35) gegenüber dem Flanschteil (34) um etwa 180° umgekehrt ist und daß der in Umfangsrichtung umlaufende Kantenteil vorzugsweise mit einer komplementären Auskehlung (33b) zur Anpassung an die umgekehrte Umbördelung versehen ist.

3. Schwingungsdämpfer nach Anspruch 1 oder Anspruch 2, dadurch gekennzeichnet, daß die nach oben gewandte Oberfläche der Umbördelung (35) etwas oberhalb der benachbarten Oberfläche des Trägers für den Maschinen-Fuß oder dergleichen auf dem Mittel zur Übertragung der Drucklast liegt, so daß diese Oberfläche der Umbördelung dafür passend hergerichtet ist, daß sie durch den Maschinen-Fuß hinuntergedrückt wird.

4. Schwingungsdämpfer nach Anspruch 1, 2 oder 3, dadurch gekennzeichnet, daß die Unterseite des als Platte ausgebildeten Elements (31) wenigstens zum Teil konkav gekrümmt ist und daß die Dicke des Körpers (32) längs des Umfangs relativ zu der Dicke weiter einwärts gelegener Teile des Körpers verringert ist.

5. Schwingungsdämpfer nach irgendeinem der Ansprüche 1 bis 4, dadurch gekennzeichnet, daß das als Platte ausgebildete Element (31) eine gepreßte Stahlplatte mit einer zentralen Vertiefung (36) zur Aufnahme des Endes einer Schraube zur Verankerung oder Einstellung für den Maschinen-Fuß ist.

6. Schwingungsdämpfer nach irgendeinem der Ansprüche 1 bis 5, dadurch gekennzeichnet, daß der in Umfangsrichtung umlaufende Flanschteil eine Ausbeulung (37) aufweist, die dem Flanschteil während der Höhenverstellung des Maschinen-Trägers Flexibilität verleiht.

## Revendications

1. Isolateur de vibrations destiné à supporter des machines, par exemple des machines-outils, comprenant un corps élastique, isolant des vibrations (32), et des moyens de transmission de la charge de compression qui comprennent un élément rigide (31) en forme de plaque qui est en contact avec la face supérieure du corps élastique et une partie supérieure rigide (33) présentant des moyens (39) servant à la régler en hauteur par rapport audit élément plaque (31), ladite partie supérieure (33) étant munie d'une portion marginale périphérique (33a) et étant adaptée pour supporter un pied de machine ou équivalent sur sa surface supérieure, caractérisé en ce que le corps (32) est muni d'une portion collet (34) en saillie vers le haut et présentant un bourrelet (35) dirigé vers l'intérieur qui est conformé pour ancrer ladite portion marginale périphérique (33a) de la partie supérieure (33) par déformation élastique dudit bourrelet (35) pour maintenir ladite partie supérieure (33) et ledit élément plaque (31) assemblés.

2. Isolateur de vibrations selon la revendication 1, caractérisé en ce que le bourrelet (35) est retourné d'environ 180° par rapport à la portion collet (34) et que la portion marginale périphérique est de préférence munie d'un évidement complémentaire (33b) destiné à recevoir le bourrelet retourné.

3. Isolateur de vibrations selon la revendication 1 ou la revendication 2, caractérisé en ce que la surface du bourrelet (35) qui regarde vers le haut se trouve au-dessus du niveau de la surface support adjacente, regardant vers le haut, prévue pour le pied de machine ou équivalent, formée sur les moyens de transmission de la charge de compression, de sorte que cette surface du bourrelet est adaptée pour être pressée vers le bas par le pied de la machine.

4. Isolateur de vibrations selon l'une des revendications 1, 2 et 3, caractérisé en ce que la face inférieure de l'élément plaque (31) possède au moins en partie une courbure concave et que l'épaisseur du corps (32) est réduite le long de la périphérie comparativement à l'épaisseur des parties du corps qui sont situées plus à l'intérieur.

5. Isolateur de vibrations selon l'une quelconque des revendications 1 à 4, caractérisé en ce que l'élément plaque (31) est une plaque d'acier emboutie présentant une dépression centrale (36) adaptée pour recevoir l'extrémité d'une vis d'ancrage ou de réglage prévue pour le pied de la machine.

6. Isolateur de vibrations selon l'une quelconque des revendications 1 à 5, caractérisé en ce la portion collet périphérique présente un ventre (37) qui donne de la flexibilité à la portion collet pendant le réglage en hauteur du support de la machine.